# EUROPÄISCHE PATENTSCHRIFT

(11) **EP 0 566 920 B1**
(45) Veröffentlichungstag und Bekanntmachung des Hinweises auf die Patenterteilung: **22.11.1995**
(21) Anmeldenummer: 93105584.2
(22) Anmeldetag: 05.04.1993
(51) Int. Cl.: F16K 5/06, F16K 15/18

(54) **Sicherheitsgruppe zur Absicherung von Trinkwassererwärmern**
Security group for a water heater
Groupe de sécurité d'un chauffe-eau

(30) Priorität: 22.04.1992 DE 9205469 U
(43) Veröffentlichungstag der Anmeldung: 27.10.1993
(73) Patentinhaber: HANS SASSERATH & CO KG, D-41352 Korschenbroich (DE)
(72) Erfinder: Hecking, Willi, W-4050 Mönchengladbach 2 (DE)
(74) Vertreter: Weisse, Jürgen, Dipl.-Phys. Patentanwalt

(56) Entgegenhaltungen:
- DE-A- 1 455 297
- FR-A- 1 296 093
- FR-A- 1 310 066
- FR-A- 2 082 006

## Beschreibung

### Technisches Gebiet

Die Erfindung betrifft eine Sicherheitsgruppe zur Absicherung von Trinkwassererwärmern, enthaltend ein als Kükenventil mit einem geraden Durchgangskanal ausgebildetes Absperrventil, bei welchem das Ventilküken mit einem Betätigungsschaft verbunden ist, und einen stromab von diesem angeordneten Rückflußverhinderer, bei welcher ein durch ein Abschlußglied abgeschlossener Prüfkanal vorgesehen ist, der bei geschlossenem Kükenventil mit dem Raum stromauf von dem Rückflußverhinderer in Verbindung steht.

### Zugrundeliegender Stand der Technik

Durch die DE-A-27 15 370 ist ein Kugelventil mit prüf- und austauschbarem Rückflußverhinderer bekannt. Das Kugelventil enthält ein Ventilgehäuse mit einem Einlaßkanal und einem damit gleichachsigen Auslaßkanal und einem dazwischen gebildeten Schließkörperhohlraum. In dem Schließkörperhohlraum ist ein im wesentlichen kugelförmiger Ventilschließkörper angeordnet, der mittels einer Handhabe um eine zu den Achsen von Einlaßkanal und Auslaßkanal senkrechte Drehachse drehbar ist. Der Ventilschließkörper bildet einen diametralen Durchgangskanal, der in einer Offenstellung des Ventilschließkörpers mit dem Einlaßkanal und dem Auslaßkanal fluchtet und in einer Schließstellung sich quer zu dem Einlaßkanal und dem Auslaßkanal erstreckt. In dem Durchgangskanal ist ein Rückflußverhinderer angeordnet. Der Rückflußverhinderer unterteilt den Durchgangskanal in einen einlaßseitigen Abschnitt von relativ kleinem Durchmesser und einen auslaßseitigen Abschnitt von relativ großem Durchmesser. In der Offenstellung des Ventilschließkörpers gestattet der Rückflußverhinderer einen Durchfluß von dem Einlaßkanal über den einlaßseitigen Abschnitt zu dem auslaßseitigen Abschnitt und dem Auslaßkanal. Der Rückflußverhinderer sperrt aber einen Rückfluß vom Auslaßkanal zum Einlaßkanal hin. Der Rückflußverhinderer bildet eine gesonderte Baugruppe, die in den weiteren, auslaßseitigen Abschnitt des Durchgangskanals eingesetzt ist. An dem Ventilgehäuse ist ein seitlicher Auslaß senkrecht zu Einlaß- und Auslaßkanal und senkrecht zu der Drehachse des Ventilschließkörpers vorgesehen, der von dem Schließkörperhohlraum ausgeht. In einer Prüfstellung des Ventilschließkörpers ist der Einlaßkanal abgesperrt. Der seitliche Auslaß steht mit dem einlaßseitigen Abschnitt des Durchgangskanals in Verbindung. Der auslaßseitige Abschnitt des Durchgangskanals ist in der Prüfstellung wiederum mit dem Auslaßkanal verbunden. Es kann dann in der Prüfstellung die Dichtheit des Rückflußverhinderers überprüft werden. Es darf nämlich kein Wasser aus dem mit dem Ausgangskanal verbundenen System über den Rückflußverhinderer aus dem seitlichen Anschluß austreten. Bei der DE-A-27 15 370 steht der Ventilschließkörper für diese Prüfung in einer Zwischenstellung, in welcher der Durchgangskanal etwas schräg zu dem seitlichen Auslaß verläuft, so daß er einerseits mit dem Auslaßkanal und andererseits mit dem seitlichen Auslaß in Verbindung steht. Bei der vollen Schließstellung des Kugelventils schließt sich der ausgangsseitige Abschnitt des Durchgangskanals an eine verschließbare Öffnung des Ventilgehäuses an, über welche der Rückflußverhinderer zu Wartungszwecken zugänglich ist und erforderlichenfalls ausgetauscht werden kann.

Eine ähnliche Anordnung, bei welcher ein Rückflußverhinderer in einem Durchgangskanal eines kugelförmigen Ventilschließkörpers angeordnet ist, ist auch durch die DE-A-35 13 533 bekannt. Dort ist in einer Stellung des Ventilschließkörpers der Rückflußverhinderer durch eine seitliche Öffnung des Ventilgehäuses zugänglich. In einer zweiten, um 90° gegen diese Stellung winkelversetzten Stellung des Ventilschließkörpers ist der auslaßseitige Abschnitt des Durchgangskanals mit dem Auslaßkanal verbunden. Der einlaßseitige Abschnitt des Durchgangskanals steht mit einer Bohrung in Verbindung, die in einem in der seitlichen Öffnung sitztenden Schraubstopfen gebildet ist. Zwischen der sphärischen Oberfläche des Ventilschließkörpers und dem Schraubstopfen ist dabei um den Durchgangskanal bzw. die Bohrung herum eine Dichtung angebracht.

Die US-A-3 464 449 beschreibt ein Kugelventil mit einer seitlichen Entleerungsöffnung. In dem kugelförmigen, mit einem Durchgangskanal versehenen Ventilschließkörper ist ein Entleerungskanal gebildet. In einer Schließstellung des Kugelventils verbindet der Entleerungskanal den Auslaßkanal des Kugelventils mit der Entleerungsöffnung. Zwischen dem Ventilschließkörper und der Wandung eines den Ventilschließkörper aufnehmenden Schließkörperhohlraumes ist eine Dichtung angeordnet.

Aus der FR-A-1 296 093 ist ein Kükenventil bekannt, das in seiner Öffnungsstellung den Durchtritt von einem Zuflussanschluss zu einem Abflussanschluss durch einen im Ventilküken vorgesehenen Durchgangskanal erlaubt. In die Durchflussöffnung münden ein weiterer, senkrecht zu dieser verlaufender Kanal ein, der sich in der Ebene der Durchflussöffnung erstreckt sowie ein in der Drehachse des Ventilkörpers angeordneter Kanal, der mit einer Öffnung zur Atmosphäre in Verbindung steht. Je nach Schließstellung des Ventilkörpers wird entweder die Zuflussöffnung oder die Abflussöffnung durch die beiden letztgenannten Kanäle zum Zwecke der Entlüftung oder Dekompression mit der Atmosphäre verbunden.

Bei dem Kugelventil nach der FR-A-2 082 006 sind im Küken ein quer zur Durchflussöffnung in deren Ebene verlaufender Kanal angeordnet sowie ein weiterer Kanal, der den Durchgangskanal bei einer Zwischenstellung des Kükens mit einer verschliessbaren Prüföffnung im Ventilgehäuse verbindet. Auf diese Weise kann die Zuflussöffnung des Ventils bei entsprechender Zwischenstellung des Ventilkükens mit der Prüföffnung verbunden werden.

Eine weitere Entlüftungsmöglichkeit zeigt die DE-A-1 455 297. Hier ist der kükenartig ausgebildete Ventilkörper in Richtung seiner Drehachse verschiebbar. Der Kükenkörper ist mit einer kreisförmig um die Drehachse verlaufenden Ventildichtung versehen, die normalerweise durch die Kraft einer Feder gegen einen im Ventilgehäuse um die Drehachse herum verlaufenden Ventilsitz angepresst ist. Zum Zwecke der Dekompression wird der Ventilkörper in Richtung seiner Drehachse bewegt und seine Dichtung wird vom Ventilsitz abgehoben. Eine Öffnung im Ventilsitz steht mit der hohlen Drehwelle des Ventilkörpers in Verbindung deren Öffnung in die Atmosphäre mündet, so dass bei gegen die Kraft der Feder vom Ventilsitz abgehobenen Ventilkörper die Dekompression in die Atmosphäre erfolgt.

Die DE-A-38 35 144 betrifft ein Kugelventil mit Rückflußverhinderer, das ein Ventilgehäuse mit einem Einlaßkanal und einem damit gleichachsigen Auslaßkanal und einem dazwischen gebildeten Schließkörperhohlraum aufweist. In dem Schließkörperhohlraum ist ein im wesentlichen kugelförmiger Ventilschließkörper angeordnet, der mittels einer Handhabe um eine zu den Achsen von Einlaßkanal und Auslaßkanal senkrechte Drehachse drehbar ist. Der Ventilschließkörper bildet einen diametralen Durchgangskanal. In dem Durchgangskanal ist ein Rückflußverhinderer angeordnet, der den Durchgangskanal in einen einlaßseitigen und einen auslaßseitigen Abschnitt unterteilt. An dem Ventilgehäuse ist ein seitlicher Auslaß vorgesehen, der in einer Prüfstellung des Ventilschließkörpers mit dem einlaßseitigen Abschnitt des Durchgangskanals in Verbindung steht, dessen auslaßseitiger Abschnitt in der Prüfstellung wiederum mit dem Auslaßkanal verbunden ist. Der seitliche Auslaß weist einen Prüfstutzen auf, in welchem ein mit einem längsverlaufenden Entleerungskanal versehenes Formstück axial zwischen einer äußeren, einer mittleren und einer inneren Stellung verstellbar geführt ist. In der äußeren Stellung befindet sich das Formstück mit seinem inneren Ende frei außerhalb des Ventilschließkörpers. In der mittleren Stellung ist das Formstück mit seinem Ende abdichtend in dem einlaßseitigen Abschnitt des Durchgangskanals geführt und mit seiner inneren Stirnfläche im Abstand von dem Rückflußverhinderer angeordnet. In der inneren Stellung greift das Formstück an dem Schließkörper des Rückflußverhinderers an und drückt diesen auf.

Aus der FR-A-1 310 066 ist eine zapfhahnartig ausgebildete Ventilanordnung mit einem Kugelventil bekannt, in deren Gehäuse abstromseitig vom Kugelventil, unmittelbar anschliessend an dieses, ein Rückflussverhinderer angeordnet ist. Hier sind jedoch Prüfanordnungen für den Rückflussverhinderer nicht vorgesehen.

### Offenbarung der Erfindung

Bei Sicherheitsgruppen der vorliegenden Art muß die Möglichkeit gegeben sein, die Funktion des Rückflußverhinderers zu überprüfen. Zu diesem Zweck muß zwischen der durch das Absperrventil bewirkten Absperrung und dem Rückflußverhinderer ein Prüfanschluß vorgesehen sein. Ein solcher Prüfanschluß ist durch ein Abschlußglied, üblicherweise einen Prüfstopfen, abgeschlossen. Nach Absperren des Absperrventils wird das Absperrglied entfernt. Es darf dann aus dem Prüfanschluß kein Wasser ausfließen. Bei den bekannten Sicherheitsgruppen ist ein gesonderter Prüfstutzen mit Prüfstopfen vorgesehen.

Der Erfindung liegt die Aufgabe zugrunde, eine Konstruktion einer Sicherheitsgruppe zu finden, bei welcher der Prüfstutzen kostengünstig vorgesehen werden kann.

Erfindungsgemäß wird diese Aufgabe dadurch gelöst, daß
(a) in das Ventilküken des Kükenventils ein erster Kanalabschnitt des Prüfkanals senkrecht zu dem Durchgangskanal verläuft, der bei geschlossenem Kükenventil den Durchgangskanal mit dem Raum stromauf von dem Rückflußverhinderer verbindet,
(b) der Betätigungsschaft einen durchgehenden Längskanal als zweiten Kanalabschnitt des Prüfkanals aufweist,
(c) der Längskanal mit dem Durchgangskanal des Ventilkükens in Verbindung steht und
(d) der Längskanal durch das in die Stirnfläche des Betätigungsschaftes lösbar eingesetzte Abschlußglied abgeschlossen ist.

Auf diese Weise wird ein gesonderter Prüfstutzen entbehrlich. Als "Prüfstutzen" wird der sowieso vorhandene Betätigungsschaft des Ventilkükens benutzt. Das bringt eine erhebliche fertigungstechnische Vereinfachung und Verbilligung der Sicherheitsgruppe.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.

### Kurze Beschreibung der Zeichnungen

- Fig.1: zeigt einen Vertikalschnitt durch eine Sicherheitsgruppe mit Kugelventil und Rückflußverhinderer und mit einem Anschlußstutzen für ein Sicherheitsventil.
- Fig.2: zeigt die Sicherheitsgruppe bei geschlossenem Absperrventil und entferntem Prüfstopfen.

### Bevorzugte Ausführung der Erfindung

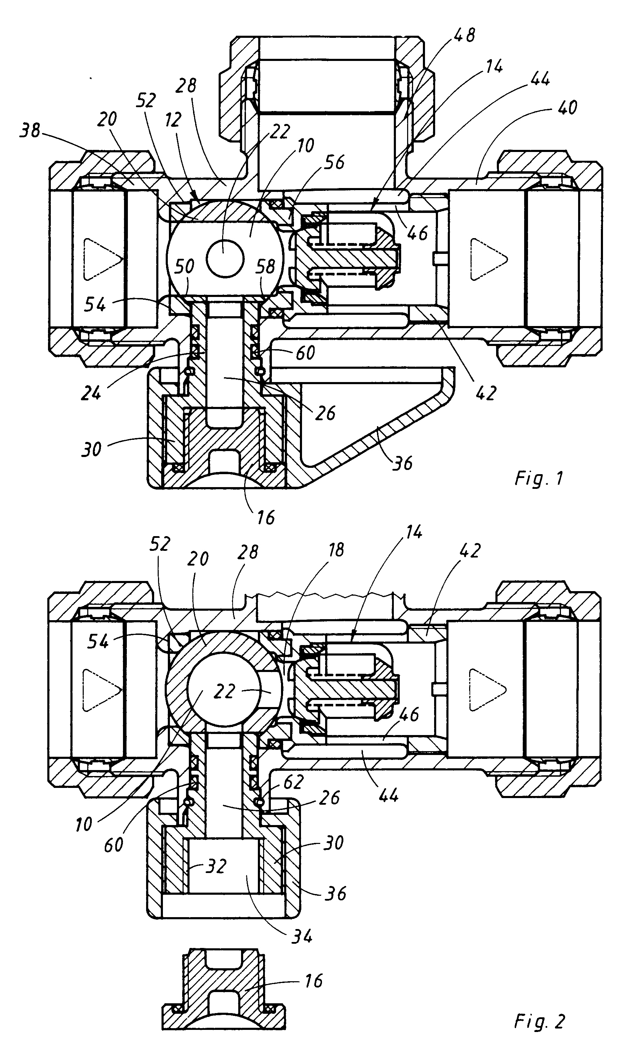

Fig.1 zeigt einen Vertikalschnitt durch eine Sicherheitsgruppe zur Absicherung von Trinkwassererwärmern mit einem als Kükenventil 12 mit einem geraden Durchgangskanal 10 ausgebildetes Absperrventil und einen stromab von diesem angeordneten Rückflußverhinderer 14. Es ist ein durch ein Abschlußglied 16 abgeschlossener Prüfkanal vorgesehen, der bei geschlossenem Kükenventil 12 mit dem Raum 18 stromauf von dem Rückflußverhinderer 14 in Verbindung steht. In dem Ventilküken 20 des Kükenventils 12 verläuft ein erster Kanalabschnitt 22 des Prüfkanals senkrecht zu dem Durchgangskanal 10. Der Kanalabschnitt 22 verbindet bei geschlossenem Kükenventil 12 den Durchgangskanal 10 mit dem Raum 18 stromauf von dem Rückflußverhinderer 14. Ein mit dem Ventilküken 20 des Kükenventils 12 verbundener Betätigungsschaft 24 enthält einen durchgehenden Längskanal 26 als zweiten Kanalabschnitt des Prüfkanals. Der Längskanal 26 steht mit dem Durchgangskanal 10 des Ventilkükens 12 in Verbindung. Der Längskanal 26 ist durch das in die Stirnfläche des Betätigungsschaftes 24 lösbar eingesetzte Abschlußglied 16 abgeschlossen. Bei der dargestellten bevorzugten Ausführung ist das Ventilküken 20 eine Kugel. Die Kugel weist längs einer ersten Achse eine den Durchgangskanal 10 bildende Durchgangsbohrung auf. Die Kugel weist weiterhin längs einer dazu senkrechten zweiten Achse eine auf einer Seite durch die Wandung des Durchgangskanals 10 hindurchgehende Verbindungsbohrung als ersten Kanalabschnitt 22 des Prüfkanals auf. An der Kugel ist längs einer zu der ersten und der zweiten Achse senkrechten dritten Achse der drehbar und abgedichtet in einem Gehäuse 28 gelagerter Betätigungsschaft 24 vorgesehen, der den Längskanal 26 als zweiten Kanalabschnitt des Prüfkanals enthält.

Wie aus Fig.1 und 2 ersichtlich ist, endet der Betätigungsschaft 24 in einem erweiterten Kopf 30. Der Längskanal 26 weist im Bereich des erweiterten Kopfes 30 einen mit Innengewinde 32 versehenen Abschnitt 34 von vergrößertem Durchmesser auf. Das Abschlußglied 16 ist ein Schraubstopfen, der in den mit Gewinde 32 versehenen Abschnitt 34 des Längskanals 26 eingeschraubt ist. An dem Kopf 30 des Betätigungsschaftes 24 ist ein Stellglied 36 angebracht, mittels dessen das Kükenventil 12 betätigt werden kann.

In das Gehäuse 28 mit einem Einlaßstutzen 38 und einem damit fluchtenden Auslaßstutzen 40 ist ein zylindrischer Einschraubkörper 42 von der Seite des Auslaßstutzens 40 her eingeschraubt. Der Rückflußverhinderer 14 ist in dem Einschraubkörper 42 gehalten. Wie aus Fig.1 und 2 ersichtlich ist, ist der Einschraubkörper in seinem Mittelbereich eingezogen, so daß sich zwischen Einschraubkörper 42 und Gehäusewandung ein Ringraum 44 bildet. Der Einschraubkörper 42 ist in seinem Mittelbereich mit seitlichen Durchbrüchen 46 versehen. An dem Gehäuse 28 ist ein seitlicher Anschluß 48 für ein Sicherheitsventil vorgesehen, der mit dem Ringraum 44 in Verbindung steht.

Die das Ventilküken 12 bildende Kugel liegt einlaßseitig an einem mit einer konkav-sphärischen, ringförmigen Lagerfläche 50 versehenen Ring 52 an. Der Ring 52 liegt wieder an einer Ringschulter 54 des Gehäuses 28 an. Auslaßseitig liegt an der Kugel ein Ring 56 an. Der Ring 56 weist ebenfalls eine konkav-sphärische, ringförmige Lagerfläche 58 auf. Der Ring 56 ist in dem Einschraubkörper 42 gehalten.

Der Betätigungsschaft 24 weist Umfangsnuten auf, in denen O-Ringe 60 gehalten sind. Dadurch erfolgt die Abdichtung. Weiterhin ist der Betätigungsschaft 24 durch einen Sicherungsring 62 axial im Gehäuse gehalten.

## Patentansprüche

1. Sicherheitsgruppe zur Absicherung von Trinkwassererwärmern, enthaltend ein als Kükenventil (12) mit einem geraden Durchgangskanal (10) ausgebildetes Absperrventil, bei welchem das Ventilküken (20) mit einem Betätigungsschaft (24) verbunden ist, und einem stromab von diesem angeordneten Rückflußverhinderer (14), bei welcher ein durch ein Abschlußglied (16) abgeschlossener Prüfkanal vorgesehen ist, der bei geschlossenem Kükenventil (12) mit dem Raum (18) stromauf von dem Rückflußverhinderer (14) in Verbindung steht**, dadurch gekennzeichnet, daß**
(a) in das Ventilküken (20) des Kükenventils (12) ein erster Kanalabschnitt (22) des Prüfkanals senkrecht zu dem Durchgangskanal (10) verläuft und bei geschlossenem Kükenventil (12) den Durchgangskanal (10) mit dem Raum (18) stromauf von dem Rückflußverhinderer (14) verbindet,
(b) der Betätigungsschaft (24) einen durchgehenden Längskanal (26) als zweiten Kanalabschnitt des Prüfkanals aufweist,
(c) der Längskanal (26) mit dem Durchgangskanal (10) des Ventilkükens (20) in Verbindung steht und
(d) der Längskanal (26) durch das in die Stirnfläche des Betätigungsschaftes (24) lösbar eingesetzte Abschlußglied (16) abgeschlossen ist.

2. Sicherheitsgruppe nach Anspruch 1, **dadurch gekennzeichnet, daß**
(a) das Ventilküken (20) eine Kugel ist,
(b) die Kugel längs einer ersten Achse eine den Durchgangskanal (10) bildende Durchgangsbohrung aufweist,
(c) die Kugel weiterhin längs einer dazu senkrechten zweiten Achse eine auf einer Seite durch die Wandung des Durchgangskanals (10) hindurchgehende Verbindungsbohrung als ersten Kanalabschnitt (22) des Verbindungskanals aufweist,
(d) an der Kugel längs einer zu der ersten und der zweiten Achse senkrechten dritten Achse der drehbar und abgedichtet in einem Gehäuse (28) gelagerter Betätigungsschaft (24) vorgesehen ist, der den Längskanal (26) als zweiten Kanalabschnitt des Prüfkanals enthält.

3. Sicherheitsgruppe nach Anspruch 2, **dadurch gekennzeichnet, daß**
(a) der Betätigungsschaft (24) in einem erweiterten Kopf (30) endet,
(b) der Längskanal (26) im Bereich des erweiterten Kopfes (30) einen mit Innengewinde (32) versehenen Abschnitt (34) von vergrößertem Durchmesser aufweist und
(c) das Abschlußglied (16) ein Schraubstopfen ist, der in den mit Gewinde (32) versehenen Abschnitt (34) des Längskanals (26) eingeschraubt ist.

4. Sicherheitsgruppe nach Anspruch 3, **dadurch gekennzeichnet, daß** an dem Kopf (30) des Betätigungsschaftes (24) ein Stellglied (36) angebracht ist.

5. Sicherheitsgruppe nach einem der Ansprüche 2 bis 4, **dadurch gekennzeichnet, daß**
(a) in ein Gehäuse (28) mit einem Einlaßstutzen (38) und einem damit fluchtenden Auslaßstutzen (40) ein zylindrischer Einschraubkörper (42) von der Seite des Auslaßstutzens (40) her eingeschraubt ist und
(b) der Rückflußverhinderer (14) in dem Einschraubkörper (42) gehalten ist.

6. Sicherheitsgruppe nach Anspruch 5, **dadurch gekennzeichnet, daß**
(a) der Einschraubkörper (42) in seinem Mittelbereich eingezogen ist, so daß sich zwischen Einschraubkörper (42) und Gehäusewandung ein Ringraum (44) bildet,
(b) der Einschraubkörper (42) in seinem Mittelbereich mit seitlichen Durchbrüchen (46) versehen ist und
(c) an dem Gehäuse (28) ein seitlicher Anschluß (48) für ein Sicherheitsventil vorgesehen ist, der mit dem Ringraum (44) in Verbindung steht.

7. Sicherheitsgruppe nach Anspruch 5 oder 6, **dadurch gekennzeichnet, daß**
(a) die das Ventilküken (20) bildende Kugel einlaßseitig an einem mit einer konkav-sphärischen, ringförmigen Lagerfläche (50) versehenen Ring (52) anliegt, der an einer Ringschulter (54) des Gehäuses (28) anliegt, und
(b) auslaßseitig an der Kugel ein Ring (56) anliegt, der eine konkav-sphärische, ringförmige Lagerfläche (58) aufweist und in dem Einschraubkörper (42) gehalten ist.

## Claims

1. Safety assembly for ensuring safe operation of drinking water heaters, comprising a shut-off valve in the form of a cock valve (12) having a straight through-passage (10), wherein the valve cock (20) is connected to an actuating shaft (24), and a back-flow preventer (14) arranged downstream thereof, a check passage closed by a closure member being provided, the check passage communicating with the space (18) upstream of the back-flow preventer, when the cock valve (12) is closed, **characterized in that**
(a) a first passage section (22) of the check passage, orthogonal to the through passage, extends through the valce cock (20) of the cock valve (12) and connects the through-passage with the space (18) upstream of the backflow-preventer, when the cock valve is closed,
(b) the actuating shaft (24) has a longutudinal through-passage (26) as second passage section of the check passage,
(c) the longitudinal passage (26) communicates with the through-passage (10) of the valve cock (20), and
(d) the longitudinal passage (26) is closed by a closure member (16) releasably inserted into the end face of the actuating shaft (24).

2. Safety assembly as claimed in claim 1, **charwacterized in that**
(a) the valve cock (20) is a ball,
(b) the bore has a through-bore extending along a first axis and defining the through-passage (10),
(c) furthermore, the ball has a connecting bore extending along a second axis orthogonal thereto and passing through the wall of the through-passage (10), as first passage section of the connecting passage,
(d) the actuating shaft (24) is provided at the ball along a third axis orthogonal to the first and second axes, and rotatably and sealingly mounted in a housing (28, and containing the longitudinal passage (26) as second passage section of the check passage.

3. Safety assembly as claimed in claim 2, **characterized in that**
(a) the actuating shaft (24) ends in a lager-diameter head (30),
(b) the longitudinal passage (26), in the region of the larger-diameter head (30), has a section (34) of larger diameter provided with an internal thread (32), and
(c) the closure member (16) is a threaded plug, which is threaded into the section (34) of the longitudinal passage (26), provided with thread (32).

4. Safety assembly as claimed in claim 3, **characterized in that** an actuating member (36) is attached to the head (30) of the actuating shaft (24).

5. Safety assembly as claimed in anyone of the claims 2 to 4, **characterized in that**
(a) a cylindrical scew-in body (42) is screwed in into a housing (28) having an inlet socket (38) and an outlet socket (40) aligned therewith from the side of the outlet socket (40), and
(b) the back-flow preventer (14) is held in the screw-in body.

6. Safety assembly as claimed in claim 5, **characterized in that**
(a) the screw-in body (42) has a smaller diameter central portion, whereby an annular chamber (44) is defined between screw-in body (42) and wall of the housing,
(b) the screw-in body (42) has lateral apertures (46) in its central portion, and
(c) a lateral connection (48) for a safety valve is provided at the housing (28) and communicates with the annular chamber (44).

7. Safety assembly as claimed in claim 5 or 6, **characterized in that**
(a) the ball forming the valve cock (20) engages, on the inlet side, a ring (52) having a concave-spherical, annular bearing surface (50), the ring engaging an annular shoulder (54) of the housing (28), and
(b) at the outlet side, a ring (56) engages the ball, the ring having a concave-spherical, annular bearing surface (58) and being held in the screw-in body (42).

## Revendications

1. Groupe de sûreté destiné à rendre sûrs des réchauffeurs d'eau potable, contenant une vanne d'arrêt développée en vanne à boisseau (12) munie d'un canal droit de passage (10) pour laquelle le boisseau de vanne (20) est relié à une tige de commande (24) et contenant une empêcheur de reflux (14) disposé en aval de celle-ci, pour lequel groupe un canal de contrôle fermé par un membre de fermeture (16) est prévu, canal étant relié à l'espace (18) en amont de l'empêcheur de reflux (14) lorsque la vanne à boisseau (12) est fermée, **caractérisé par le fait que**
(a) une première section de canal (22) du canal de contrôle s'étend dans le boisseau de vanne (20) de la vanne à boisseau (12) verticalement par rapport au canal de passage (10) et relie le canal de passage (10) à l'espace (18) en amont de l'empêcheur de reflux (14) lorsque la vanne à boisseau (12) est fermée,
(b) la tige de commande (24) présente un canal longitudinal (26) continu considéré comme seconde section de canal du canal de contrôle,
(c) le canal longitudinal (26) est relié au canal de passage (10) du boisseau de vanne (20) et
(d) le canal longitudinal (26) est fermé par le membre de fermeture (16) inséré de façon amovible dans la face frontale de la tige de commande (24).

2. Groupe de sûreté selon la revendication 1, **caractérisé par le fait que**
(a) le boisseau de vanne (20) est une bille,
(b) la bille présente le long d'un premier axe un perçage de passage formant le canal de passage (10),
(c) la bille présente en outre le long d'un deuxième axe vertical par rapport au premier un perçage de jonction pénétrant sur un côté par la paroi du canal de passage (10) et considéré comme première section de canal (22) du canal de jonction,
(d) la tige de commande (24), située de façon rotative et étanche dans un boîtier (28) et contenant le canal longitudinal (26) considéré comme seconde section de canal du canal de contrôle, est prévue à la bille le long d'un troisième axe vertical par rapport au premier et au deuxième axe.

3. Groupe de sûreté selon la revendication 2, **caractérisé par le fait que**
(a) la tige de commande (24) se termine dans une tête élargie (30),
(b) le canal longitudinal (26) présente dans le domaine de la tête élargie (30) une section (34) d'un diamètre agrandi pourvue d'un filet femelle (32) et
(c) le membre de fermeture (16) est un bouchon fileté vissé dans la section (34) du canal longitudinal (26) pourvue du filet (32).

4. Groupe de sûreté selon la revendication 3, **caractérisé par le fait qu'**à la tête (30) de la tige de commande (24) est placé un membre de réglage (36).

5. Groupe de sûreté selon l'une des revendications 2 à 4, **caractérisé par le fait que**
(a) un corps à vis (42) cylindrique est vissé du côté du manchon de sortie (40) dans un boîtier (28) muni d'un manchon d'entrée (38) et d'un manchon de sortie (40) aligné avec ce dernier et
(b) l'empêcheur de reflux (14) est tenu dans le corps à vis (42).

6. Groupe de sûreté selon la revendication 5, **caractérisé par le fait que**
(a) le corps à vis (42) est enfoncé dans son domaine médian si bien qu'il se forme un espace annulaire (44) entre le corps à vis (42) et la paroi de boîtier,
(b) le corps à vis (42) est pourvu dans son domaine médian de percements (46) latéraux et
(c) un raccord (48) latéral relié à l'espace annulaire (44) est prévu au boîtier (28) pour une vanne de sûreté.

7. Groupe de sûreté selon la revendication 5 ou 6, **caractérisé par le fait que**
(a) la bille formant le boisseau de vanne (20) est appliquée du côté de l'entrée à un anneau (52) pourvu d'une surface de palier (50) concave-sphérique en forme d'anneau et appliqué à une épaule d'anneau (54) du boîtier (28) et
(b) un anneau (56) est appliqué du côté de la sortie à la bille, anneau présentant une surface de palier (58) concave-sphérique en forme d'anneau et étant tenu dans le corps à vis (42).
